# FASCICULE DE BREVET EUROPEEN

(11) **EP 3 616 280 B1**
(45) Date de publication et mention de la délivrance du brevet: **05.04.2023**
(21) Numéro de dépôt: 18722691.5
(22) Date de dépôt: 19.04.2018
(51) Int. Cl.: H01R 43/20, H01R 13/514, H01R 13/52, H01R 13/422, H02G 3/08

(54) **PROCÉDÉ DE CÂBLAGE INCLUANT UNE ÉTAPE D'ENROBAGE DE CONNECTEURS NON ÉTANCHES DANS UNE RÉSINE**
VERDRAHTUNGSVERFAHREN MIT EINEM SCHRITT ZUM ÜBERZIEHEN VON NICHTVERSIEGELTEN VERBINDERN IN EINEM HARZ
WIRING METHOD INCLUDING A STEP OF ENROBING NON-SEALED CONNECTORS IN A RESIN

(30) Priorité: 25.04.2017 FR 1753562
(43) Date de publication de la demande: 04.03.2020
(73) Titulaire: JTEKT Europe, 69540 Irigny (FR)
(72) Inventeur: BROCHOT, Patrice, 69600 Oullins (FR); PAULY, Pascal, 69530 Brignais (FR); REY, Laurent, 69100 Villeurbanne (FR)
(74) Mandataire: Germain Maureau
(86) Numéro de dépôt international: PCT/FR2018/050981
(87) Numéro de publication internationale: WO 2018/197784

(56) Documents cités:
- EP-A1- 0 999 601
- EP-A1- 2 278 666
- EP-A1- 2 390 963
- EP-A2- 1 263 039
- EP-A2- 2 500 986
- WO-A1-03/063300
- FR-A1- 2 886 065
- FR-A1- 2 908 932
- US-A1- 2002 101 041
- US-A1- 2004 171 311
- US-A1- 2005 255 748
- US-A1- 2010 099 279

## Description

La présente invention concerne le domaine général des procédés dits « procédés de câblage » qui permettent de connecter un câble électrique à un appareil électrique.

La présente invention concerne plus particulièrement un procédé destiné à connecter un ou des câbles électriques à un moteur d'assistance et/ou à un calculateur au sein d'un système de direction assistée.

Lorsque l'on connecte un câble à un appareil électrique au sein d'un véhicule, il est important de veiller à ce que la connexion soit étanche à l'eau.

A cet effet, on connaît notamment un procédé qui consiste à utiliser un ou des connecteurs étanches, qui sont pourvus d'organes d'étanchéité, de type joints en élastomère, qui assurent une étanchéité à l'eau entre la partie femelle et la partie mâle du connecteur.

Toutefois, de tels connecteurs étanches présentent notamment l'inconvénient d'être volumineux et relativement onéreux.

Selon un procédé alternatif, il est connu de raccorder directement le câble électrique à l'appareil électrique, en soudant les extrémités dénudées des fils constitutifs dudit câble électrique sur des pistes prévues à cet effet sur l'appareil électrique, puis de noyer l'ensemble dans un matériau polymère d'enrobage, tel qu'une résine.

Les documents US2002/101041A1, EP2500986A2, EP0999601A1 divulguent des connexions étanches classiques.

Toutefois, une première difficulté d'un tel procédé tient au fait qu'il peut être difficile d'accéder aux pistes et aux extrémités des fils pour effectuer la soudure, sans endommager des composants voisins ou même le boîtier qui protège l'appareil électrique et qui peut être réalisé dans un matériau polymère relativement sensible à la chaleur.

Une autre difficulté tient au fait qu'il est parfois difficile de maintenir les fils en place, au contact des pistes, pendant l'opération de soudage. L'outillage à utiliser peut donc être relativement complexe et onéreux.

Les objets assignés à l'invention visent par conséquent à remédier aux inconvénients susmentionnés et à proposer un nouveau procédé de câblage qui permette de connecter facilement, à moindre coût, et de manière étanche un câble électrique à un appareil électrique.

Les objets assignés à l'invention sont atteints au moyen d'un procédé de câblage permettant de raccorder un câble électrique, comprenant un ou plusieurs fils conducteurs, à un appareil électrique, tel qu'un groupe moto-calculateur de direction assistée, ledit procédé comprenant :
une étape (a) de préparation au cours de laquelle
on prépare au moins un connecteur qui comprend d'une part une première portion, dite portion mâle, qui porte au moins une première borne électriquement conductrice, dite borne mâle, et d'autre part une seconde portion, dite portion femelle, qui est distincte de la portion mâle et qui porte au moins une seconde borne électriquement conductrice, dite borne femelle, ledit connecteur comprenant également au moins un organe de retenue qui permet de maintenir la portion mâle contre la portion femelle de telle sorte que l'au moins une borne mâle soit au contact de l'au moins une borne femelle,
on équipe l'appareil électrique d'un boîtier de connexion, au sein duquel on place la portion mâle du connecteur, et l'on raccorde électriquement la borne mâle à l'appareil électrique,
on équipe le câble électrique avec la portion femelle du connecteur, et l'on raccorde électriquement la borne femelle à au moins un fil conducteur,
puis une étape (b) de connexion, au cours de laquelle on engage et l'on fixe la portion femelle du connecteur sur la portion mâle dudit connecteur au moyen de l'au moins un organe de retenue, de sorte à créer et maintenir une jonction électrique sans soudure entre la borne mâle et la borne femelle,
puis une étape (c) d'enrobage, au cours de laquelle on remplit le boîtier de connexion d'un matériau d'enrobage polymère qui recouvre les portions mâle et femelle du connecteur de sorte à former une enveloppe étanche qui protège au moins de l'eau liquide la jonction électrique sans soudure.

Avantageusement, l'invention permet de combiner les avantages de l'utilisation d'un connecteur (ou de plusieurs connecteurs), qui assure(nt) un positionnement précis et un maintien mécanique solide de leurs bornes électriques mâle et femelle l'une au contact de l'autre, sans qu'il soit nécessaire de réaliser la moindre soudure, avec les avantages d'une réalisation de l'étanchéité à l'eau liquide qui ne dépend pas desdits connecteurs, et en l'occurrence qui est obtenue de manière simple et rapide par encapsulation dudit ou desdits connecteur(s) dans un matériau polymère d'enrobage, ce qui permet notamment d'utiliser, de préférence, des connecteurs non étanches, dépourvus de joints en élastomère, et qui présentent par conséquent un volume réduit et un coût moindre.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en coupe de côté, un exemple d'appareil électrique comprenant une carte électronique connectée à plusieurs câbles électriques par un procédé de câblage selon l'invention.
La figure 2 illustre, selon une vue schématique en coupe de côté, un exemple d'étape (a) de préparation selon l'invention, au cours de laquelle on équipe l'appareil électrique et le câble électrique de leur portion de connecteur respective.
La figure 3 illustre, selon une vue schématique en coupe de côté, un exemple d'étape (b) de connexion au cours de laquelle on réunit et on assemble mécaniquement les portions mâle et femelle du connecteur de la figure 2 de manière à connecter mécaniquement et électriquement le câble électrique sur l'appareil électrique.
La figure 4 illustre, selon une vue schématique en coupe de côté, un exemple d'étape (c) d'enrobage, au cours de laquelle on rend la connexion étanche à l'eau liquide en remplissant le boîtier de connexion d'un matériau polymère d'enrobage, initialement liquide, du genre résine.
Les figures 5 et 6 illustrent, selon des vues de détail en coupe de côté, des exemples de protubérances prévues dans l'embase d'une portion femelle de connecteur afin d'assurer l'étanchéité dudit connecteur au matériau polymère d'enrobage liquide lors de l'étape (c) d'enrobage.
La figure 7 illustre, selon une vue en coupe de côté, la mise en place d'une gaine thermo-rétractable qui couvre une partie de la portion femelle du connecteur et l'extrémité correspondante du câble électrique, de sorte à empêcher l'intrusion de matériau polymère d'enrobage entre le câble électrique et la portion femelle du connecteur lors de l'étape (c) d'enrobage.

La présente invention concerne un procédé de câblage permettant de raccorder un câble électrique 1, comprenant un ou plusieurs fils conducteurs 2, à un appareil électrique 3.

Ledit appareil électrique 3 peut être de préférence un moteur électrique 4, notamment un moteur électrique d'assistance pour un système de direction assistée, ou un calculateur 5, notamment un calculateur de direction assistée, ou bien un ensemble comprenant un moteur d'assistance 4 et un calculateur 5 de direction assistée, dit « groupe moto-calculateur ».

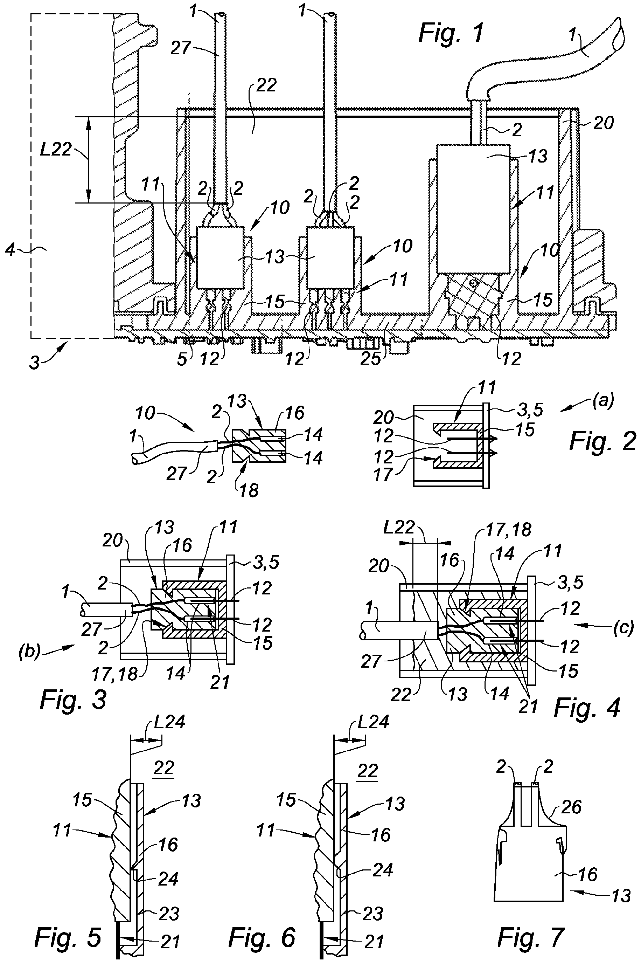

Tel que cela est illustré sur la figure 1, le calculateur 5 peut se présenter sous forme d'une carte électronique, et pourra, par commodité de description, être assimilé à une carte électronique 5 dans ce qui suit.

Selon l'invention, le procédé comprend une étape (a) de préparation au cours de laquelle on prépare au moins un connecteur 10 qui comprend d'une part une première portion 11, dite portion mâle 11, qui porte au moins une première borne 12 électriquement conductrice, dite borne mâle 12, et d'autre part une seconde portion 13, dite portion femelle 13, qui est distincte de la portion mâle 11 et qui porte au moins une seconde borne 14 électriquement conductrice, dite borne femelle 14.

De préférence, tel que cela est notamment visible sur la figure 2, la portion mâle 11 du connecteur 10 comprend une première embase 15, dite embase mâle 15, qui est électriquement isolante et qui sert de support à l'au moins une borne mâle 12, tandis que la portion femelle 13 dudit connecteur 10 comprend une seconde embase 16, dite embase femelle 16, qui est électriquement isolante et qui sert de support à l'au moins une borne femelle 14.

L'embase 15, 16, de préférence rigide, permet avantageusement de maintenir la ou les bornes mâles 12, respectivement la ou les bornes femelles 14, en position fixe les unes par rapport aux autres, et par rapport à la portion de connecteur 11, 13 correspondante, selon un agencement spatial prédéterminé, ordonné et fixe, ce qui simplifie notamment la connexion de la portion mâle 11 sur la portion femelle 13.

L'embase 15, 16 facilite en outre la manipulation de la portion 11, 13 de connecteur correspondante.

De préférence, l'embase 15, 16 est réalisée dans un matériau polymère, préférentiellement rigide, à la fois léger et électriquement isolant.

L'embase femelle 16, et plus globalement la portion femelle 13, sera de préférence de forme sensiblement conjuguée à l'embase mâle 15, et plus globalement à la portion mâle 11, de sorte à permettre un emboîtement lors de la connexion.

De préférence, la ou les bornes mâles 12 pourront être formées par une, respectivement des, broches métalliques rigides, et la ou les bornes femelles 14 pourront être formées par des languettes ou des douilles métalliques.

On notera que les notions de « mâle » et de « femelle » sont utilisées par souci de clarté, et ne préjugent pas de la forme respective des portions de connecteur 11, 13, même si, tel que cela est illustré sur les figures 2 à 4, les bornes mâles 12 peuvent de préférence être saillantes afin de pénétrer dans des bornes femelles 14 préférentiellement rentrantes, de forme sensiblement conjuguée, et par exemple de forme tubulaire ou tubulaire fendue.

De façon particulièrement préférentielle, le câble électrique 1 comprend plusieurs fils conducteurs 2 isolés électriquement les uns des autres et formant ainsi des circuits distincts.

De même, l'appareil électrique pourra comprendre plusieurs pistes ou plusieurs circuits séparés.

L'embase mâle 15 servira alors de préférence de support groupé à une pluralité de bornes mâles 12 électriquement conductrices, raccordées électriquement chacune à la piste ou au circuit de l'appareil électrique qui lui correspond, tandis que l'embase femelle 16 servira de support groupé à une pluralité de bornes femelles 14 électriquement conductrices, raccordées électriquement chacune à l'un fils conducteurs 2, et agencées pour correspondre chacune à l'une des bornes mâles 12.

Ainsi, le connecteur 10 comprendra de préférence plusieurs voies, et permettra avantageusement de raccorder plusieurs circuits en une seule opération de connexion.

Le connecteur 10 comprend également au moins un organe de retenue 17, 18 qui permet de maintenir la portion mâle 11 contre la portion femelle 13 de telle sorte que l'au moins une borne mâle 12 soit au contact de l'au moins une borne femelle 14.

L'au moins un organe de retenue 17, 18 permet donc de réaliser une jonction mécanique entre la portion mâle 11 et la portion femelle 13, et plus préférentiellement entre l'embase mâle 15 et l'embase femelle 16, afin de tenir l'une à l'autre la portion mâle 11 et la portion femelle 13, et plus particulièrement afin de tenir l'une à l'autre la borne mâle 12 et la borne femelle 14.

Cette jonction mécanique est suffisamment solide pour empêcher la portion mâle 11 de se détacher spontanément de la portion femelle 13, et par conséquent pour empêcher les bornes mâle 12 et femelle 14 de se séparer, après l'étape (b) de connexion et avant, puis pendant et après, l'étape (c) d'enrobage.

Cette jonction mécanique est en outre suffisamment contraignante pour maintenir la ou les bornes mâles 12 au contact de, et en appui contre, les bornes femelles 14 correspondantes, c'est-à-dire pour assurer et maintenir une jonction électrique au sein du connecteur 10, et ce après l'étape (b) de connexion et avant, puis pendant et après, l'étape (c) d'enrobage.

Selon une possibilité de réalisation, les organes de retenue mâle 17 et femelle 18 pourront être formés par les bornes mâle 12 et femelle 14 elles-mêmes.

A cet effet, lesdites bornes mâle 12 et femelle 14 pourront être agencées pour s'emboîter élastiquement l'une dans l'autre, de sorte que la borne mâle 12, de préférence formée par une broche pleine, est maintenue par pincement élastique par et contre, voire dans, la borne femelle 14, alors de préférence formée par un manchon cylindrique fendu qui enserre la broche mâle 12.

Le serrage (typiquement le serrage concentrique) d'une borne 12 dans l'autre borne 14 assurera une fixation suffisamment solide pour éviter un arrachement accidentel avant et pendant l'étape (c) d'enrobage.

Selon une autre possibilité préférentielle de réalisation, éventuellement complémentaire de la précédente, ce sont les embases mâle 15 et femelle 16, isolantes, qui pourront être agencées pour s'emboîter élastiquement l'une dans l'autre, la fixation de l'embase mâle 15 sur l'embase femelle 16 étant alors assurée par serrage élastique, typiquement par serrage concentrique d'une embase 15 sur l'autre embase 16.

On notera que les deux possibilités de réalisation susmentionnées peuvent être mises en oeuvre au moyen de portions de connecteur 11, 13 de forme simple et particulièrement compacte, et notamment qui présentent des parois lisses, de telle sorte que lesdites portions de connecteur sont faciles et peu onéreuses à réaliser par moulage.

Selon une autre variante possible de réalisation les organes de retenue 17, 18 peuvent former véritablement des organes de verrouillage, qui, une fois enclenchés, procurent avantageusement un effet anti-retour qui s'oppose à toute manoeuvre d'extraction de la portion femelle 13 hors de la portion mâle 11, sauf à ce que, éventuellement, l'opérateur effectue volontairement une opération de déverrouillage spécifique pour libérer les organes de retenue femelles 18 des organes de retenue mâles 17.

Un tel verrouillage a en particulier pour effet d'empêcher toute séparation mutuelle spontanée des portions mâle 11 et femelle 13 de connecteur lorsque l'on exerce simplement une traction sur le câble électrique 1.

Ceci étant, l'au moins un organe de retenue 17, 18 sera de préférence agencé de sorte à être manuellement réversible, c'est-à-dire autorisera, à condition que l'opérateur réalise une manoeuvre de déverrouillage spécifique, une ouverture du connecteur 10 par séparation de la portion mâle 11 et de la portion femelle 13.

Bien entendu, on pourra utiliser à cet effet toute configuration appropriée des organes de retenue 17, 18 à même d'assurer un verrouillage.

Ainsi, on pourrait notamment envisager des organes de retenue 17, 18 capable d'assurer la fixation mécanique de l'embase femelle 16 sur l'embase mâle 15, par vissage, ou par verrouillage à baïonnette (quart de tour), ou par encliquetage, etc.

De préférence, par commodité de fabrication et de mise en oeuvre, les organes de retenue mâle 17 et femelle 18 coopèrent par encliquetage.

A cet effet, et tel que cela est illustré sur les figures 2, 3 et 4, les organes de retenue mâle 17 peuvent avantageusement comprendre des languettes élastiquement flexibles pourvues de crochets, qui viennent s'engager dans des organes de retenue femelle 18 formés par des encoches.

Un tel agencement permet avantageusement d'obtenir un verrouillage automatique du connecteur 10, sitôt les portions mâle 11 et femelle 13 convenablement connectées l'une à l'autre.

Lors de l'étape (a) de préparation, on équipe également l'appareil électrique 3, 4, 5 d'un boîtier de connexion 20, au sein duquel on place la portion mâle 11 du connecteur, et l'on raccorde électriquement la borne mâle 12 à l'appareil électrique 3, 4, 5, tel que cela est illustré sur la figure 2.

Le boîtier de connexion 20 pourra prendre sensiblement la forme d'un bassin, par exemple parallélépipédique, dont les parois latérales, de préférence en matériau polymère rigide, entourent la portion mâle 11 du connecteur et dépassent de préférence ladite portion mâle 11 en hauteur.

Le fond dudit bassin peut avantageusement être accolé à l'appareil électrique 3, 4, 5, et plus particulièrement être accolé à la carte électronique formant le calculateur 5, ou peut même être formé par un élément isolant dudit appareil électrique 3, 4, 5, tel qu'un élément de carter en matériau polymère rigide ou bien une face isolante de la carte électronique 5 susmentionnée.

Le raccordement de la ou des bornes mâles 12 à l'appareil électrique 3, 4, 5 peut notamment s'effectuer en soudant lesdites bornes mâles 12 à la carte électronique 5, tel que cela est notamment illustré sur la figure 2.

Lors de l'étape (a) de préparation, on équipe également le câble électrique 1 avec la portion femelle 13 du connecteur 10, et l'on raccorde électriquement la borne femelle 14 à au moins un fil conducteur 2, tel que cela est illustré notamment sur la figure 2.

Le procédé comprend ensuite une étape (b) de connexion, au cours de laquelle on engage et l'on fixe la portion femelle 13 du connecteur sur la portion mâle 11 dudit connecteur (qui était initialement séparée de la portion femelle 13 lors de l'étape (a) de préparation), au moyen de l'au moins un organe de retenue 17, 18, de sorte à créer et maintenir une jonction électrique 21 entre la (chaque) borne mâle 12 et la borne femelle 14 correspondante, tel que cela est illustré notamment sur la figure 3.

En d'autres termes, on réunit et l'on assemble la portion mâle 11 et la portion femelle 13 pour reconstituer le connecteur 10 et, ce faisant, brancher électriquement les bornes males 12 sur leurs bornes femelles 14 respectives.

Comme indiqué plus haut, l'utilisation d'un connecteur 10, pourvu d'organes de retenue 17, 18 qui sont actionnés lors de l'étape (b) de connexion pour assurer un maintien mécanique autonome des portions mâle 11 et femelle 13 l'une contre l'autre, permet de réaliser facilement une connexion électrique durable et solide entre les bornes mâles 12 et femelles 14, aussi bien avant l'étape (c) d'enrobage que pendant l'étape (c) d'enrobage.

On évite ainsi toute erreur de positionnement des bornes 12, 14 et tout risque de faux contact lors du câblage.

De façon particulièrement préférentielle, l'utilisation d'un connecteur 10 mécanique permet de réaliser une jonction électrique 21 sans soudure.

Par « jonction électrique 21 sans soudure », on désigne une jonction selon laquelle le contact électrique entre les bornes mâles 12 et bornes femelles 14 est établi par un processus de contrainte mécanique, sans fusion du métal (ou du matériau conducteur) constitutif des bornes 12, 14 ni fusion d'un éventuel métal (ou matériau conducteur) d'apport, c'est-à-dire sans opération de soudage ni opération de brasage.

Ainsi, la jonction électrique 21 est opérée de façon simple et peu coûteuse, sans qu'il soit notamment nécessaire de chauffer les bornes 12, 14, ou les abords du connecteur 10 ou du boîtier de connexion 20, à une température qui serait supérieure à la température de fusion du métal d'apport ou du métal constitutif de bornes 12, 14, et à plus forte raison qui serait supérieure à la température de fusion du matériau constitutif du boîtier de connexion 20 ou du matériau constitutif des embases 15, 16 des portions mâle 11 et femelle 13 du connecteur 10.

On évite ainsi tout dommage thermique aux pièces à câbler.

Le procédé comprend ensuite une étape (c) d'enrobage, au cours de laquelle on remplit le boîtier de connexion 20 d'un matériau d'enrobage 22 polymère, de préférence une résine, qui recouvre les portions mâle 11 et femelle 13 du connecteur 10 de sorte à former une enveloppe étanche qui protège au moins de l'eau liquide la jonction électrique 21, ici de préférence la jonction électrique 21 sans soudure.

Plus précisément, le matériau d'enrobage 22, qui est de préférence versé à l'état liquide dans le boîtier de connexion 20, lequel permet de contenir ledit matériau d'enrobage 22 au voisinage du connecteur 10 pendant sa solidification, recouvre les portions mâle 11 et femelle 13, et plus particulièrement les embases 15, 16 correspondantes, ainsi que le plan de joint apparent entre lesdites portions mâle 11 et femelle 13, pour former, avec les embases 15, 16 et autour de celles-ci, un bloc monolithique qui empêche toute intrusion d'eau dans le connecteur 10, et plus particulièrement qui empêche toute infiltration d'eau à l'interface entre lesdites embases 15, 16, à travers le plan de joint qui marque, à l'extérieur du connecteur 10, la limite de séparation entre lesdites embases 15, 16.

Avantageusement, le matériau d'enrobage 22 fait barrière au moins à l'eau liquide, et potentiellement aussi à d'autre liquides susceptibles de se trouver dans l'environnement de l'appareil électrique 3, 4, 5, tels que lubrifiant, carburant, liquide de frein, liquide de refroidissement, etc., et empêche ainsi lesdits liquides de pénétrer dans le connecteur 10 et d'atteindre les bornes 12, 14 électriquement conductrices, et plus globalement les circuits électriques associés auxdites bornes 12, 14, depuis l'extérieur du connecteur 10.

La jonction électrique 21 est ainsi protégée des courts-circuits et de la corrosion.

Le connecteur 10, l'agencement du boîtier de connexion 20 et le matériau d'enrobage 22 seront choisis de sorte à assurer une étanchéité à l'eau liquide (eau de ruissellement, gouttes d'eau projetées par les roues depuis la route, brouillard salin, etc.) dans une plage de pression qui s'étendra de la pression atmosphérique normale (typiquement 1 bar) à au moins 10 bar, au moins 50 bar, voire jusqu'à 100 bar, de manière à pouvoir résister aussi bien à un ruissellement gravitaire d'eau qu'au jet d'un nettoyeur à haute pression, et plus particulièrement de manière à pouvoir résister au jet issu d'un nettoyeur à haute pression qui confère à l'eau une pression nominale comprise entre 80 et 100 bar, une température de 70°C à 80°C, lorsque la buse du nettoyeur dirige ledit jet d'eau sur le boîtier de connexion 20 à une distance comprise entre 80 mm et 300 mm dudit boîtier.

De préférence, une fois solidifié, le matériau d'enrobage 22 est suffisamment rigide pour assurer un maintien solide du connecteur 10 dans le boîtier, tout en évitant cependant de causer l'apparition de contraintes mécaniques entre les portions mâle 11 et femelle 13 ou entre le connecteur 10 et le boîtier de connexion 20, en particulier en cas de variation rapide et forte de température (choc thermique).

A cet effet, on choisira de préférence comme matériau d'enrobage une résine époxy, ou bien encore un élastomère de type silicone ou polyuréthane.

De préférence, en plus de servir de support à au moins une borne mâle 12, l'embase mâle 15 du connecteur 10 sert également de support à au moins un premier organe de retenue 17, dit organe de retenue mâle 17, qui est distinct de ladite au moins une borne mâle 12.

Préférentiellement, par commodité de fabrication, et tel que cela est notamment illustré sur les figures 2 à 4, ledit premier organe de retenue 17 sera formé d'un seul tenant avec ladite embase mâle 15, de préférence dans un même bloc de polymère rigide.

De même, l'embase femelle 16 sert de préférence également de support à un second organe de retenue, dit « organe de retenue femelle » 18, qui est distinct de la borne femelle 14, et qui est de préférence formé d'un seul tenant avec ladite embase femelle 16, et qui est agencé pour venir en prise avec le premier organe de retenue (mâle) 17, lors de l'étape (b) de connexion, afin de créer et maintenir une jonction mécanique entre les portions mâle 11 et femelle 13 du connecteur.

Ainsi, en définitive, lors de l'étape (b) de connexion, on engage la portion femelle 13 du connecteur sur (ou dans, ou même par-dessus) la portion mâle 11 du connecteur de sorte à réaliser entre lesdites portions mâle 11 et femelle 13 du connecteur 10 d'une part une jonction mécanique, selon laquelle l'organe de retenue femelle 18 vient en prise sur l'organe de retenue mâle 17 (ou inversement) de manière à fixer et retenir la portion femelle 13 sur la portion mâle 11 et à s'opposer à la séparation mutuelle desdites portions mâle et femelle, et d'autre part une jonction électrique 21, ici de préférence sans soudure, qui est retenue par la jonction mécanique, et selon laquelle la borne femelle 14 vient et reste au contact électrique de la borne mâle 12.

De la sorte, on peut, de préférence, avantageusement dissocier la fonction de jonction électrique, assurée par les bornes 12, 14, de la fonction de jonction mécanique assurée par les embases 15, 16 et leurs organes de retenue 17, 18.

On peut donc réaliser entre la portion mâle 11 et la portion femelle du connecteur 13 une jonction mécanique solide, capable de résister au moins à un certain seuil d'effort d'arrachement de valeur prédéterminée, sans aucun risque d'endommager ou de fragiliser les bornes 12, 14 électriquement conductrices.

Lesdites bornes 12, 14 peuvent par conséquent être relativement fines, légères et peu encombrantes.

Comme indiqué plus haut, les organes de retenue mâles 17 de l'embase mâle 15 et les organes de retenue femelles 18 de l'embase femelle 16 peuvent de préférence coopérer par encliquetage.

De façon préférentielle, le sous-ensemble formé par les portions mâle 11 et femelle 13 du connecteur 10 assemblées et maintenues par l'organe (ou les organes) de retenue 17, 18 lors de l'étape (b) de connexion, et plus particulièrement le sous-ensemble formé par la réunion et la jonction mécanique des embases mâle 15 et femelle 16, n'est, avant l'étape (c) d'enrobage, pas étanche à l'eau liquide.

A ce titre, le connecteur 10 peut en particulier être de préférence dépourvu de joint en élastomère apte à créer et assurer une étanchéité à l'eau liquide entre la portion mâle 11 et la portion femelle 13 du connecteur 10 (et plus particulièrement entre l'embase mâle 15 et l'embase femelle 16) lors de l'étape (b) de connexion.

En d'autres termes, l'invention permet d'utiliser un ou des connecteurs 10 intrinsèquement non étanches à l'eau, et donc relativement compacts et bon marchés, puisque c'est l'opération d'enrobage, postérieure à l'opération de connexion, qui rend étanche (au moins à l'eau) ledit connecteur 10, grâce à l'ajout du matériau d'enrobage 22 qui remédie au défaut d'étanchéité (à l'eau) qui existe initialement entre les embases 15, 16 (et qui permettrait, dans l'absolu, à de l'eau liquide de s'introduire dans le connecteur 10 nu, jusqu'aux bornes 12, 14).

En revanche, les embases 15, 16 respectives de la portion mâle 11 et de la portion femelle 13 du connecteur 10 sont de préférence agencées de manière à ce que, une fois l'étape (b) de connexion réalisée, lesdites embases 15, 16 enveloppent la jonction électrique 21 de façon étanche au matériau d'enrobage 22 polymère, lorsque ce dernier se trouve à l'état liquide, de sorte à empêcher une intrusion dudit matériau d'enrobage 22 polymère au niveau de la jonction électrique 21 lors de l'étape (c) d'enrobage.

En d'autres termes, on utilise de préférence un connecteur 10 qui est intrinsèquement étanche au matériau d'enrobage 22 liquide (résine), notamment, le cas échéant, dans la gamme de pressions utilisée pour injecter ledit matériau d'enrobage, mais pas intrinsèquement étanche à l'eau liquide.

Avantageusement, en protégeant du matériau d'enrobage 22 les bornes 12, 14, et plus particulièrement la jonction électrique 21, on évite que le matériau d'enrobage ne crée, lors de l'étape (c) d'enrobage, un faux contact en écartant les bornes mâle 12 et femelle 14 l'une de l'autre ou en formant une pellicule électriquement isolante entre ces dernières.

A cet effet, l'embase femelle 16 du connecteur 10 peut par exemple présenter de préférence une forme tubulaire délimitée par une paroi latérale 23, et dans laquelle l'embase mâle 15 vient s'engager lors de l'étape (b) de connexion, ou, inversement, l'embase mâle 15 peut présenter une forme tubulaire délimitée par une paroi latérale, dans laquelle l'embase femelle 16 vient s'engager lors de l'étape (b) de connexion.

Ainsi, l'une des embases 15, 16 peut former sensiblement une sorte de cloche qui vient recouvrir l'autre embase 16, 15.

Avantageusement, la paroi latérale 23 de l'embase femelle 16 et/ou l'embase mâle 15, ou inversement, comporte alors de préférence, tel que cela est illustré sur les figures 5 et 6, des protubérances 24, du type déflecteurs ou lèvres, qui créent avec l'autre embase 16, 15 au moins une chicane et/ou au moins un rétrécissement, étanche au matériau d'enrobage 22 polymère à l'état liquide.

Ladite chicane, ou ledit rétrécissement, créé par la protubérance 24, limite avantageusement la largeur de la section de passage entre l'embase 15 et l'embase femelle 16 à une valeur telle que, tout en autorisant l'engagement de l'embase mâle 15 dans l'embase femelle 16 (ou inversement), elle bloque le matériau d'enrobage 22 liquide à distance de la jonction électrique 21, afin d'éviter toute infiltration dudit matériau d'enrobage 22 dans la zone de ladite jonction électrique 21.

A titre indicatif, la largeur de passage L24 sera ainsi rendue inférieure ou égale à 0,3 mm, voire de préférence égale ou inférieure à 0,1 mm.

Par ailleurs, il est possible de prévoir une pluralité de telles chicanes ou de tels rétrécissements au sein d'un même connecteur 10, pour constituer autant d'obstacles successifs à l'infiltration du matériau d'enrobage 22.

Selon une possibilité préférentielle de mise en oeuvre qui correspond notamment à la figure 1, le procédé permet de raccorder à l'appareil électrique 3, 4, 5 plusieurs câbles électriques 1 distincts, comprenant chacun un ou plusieurs fils conducteurs 2.

De préférence, lors de l'étape (a) de préparation, on prévoit alors plusieurs connecteurs 10 dont on place les portions mâles 11 respectives dans le boîtier de connexion 20 et l'on équipe chaque câble électrique 2 d'une portion femelle 13 de connecteur correspondante, et, lors de l'étape (b) de connexion, on raccorde chaque portion femelle 13 à la portion mâle 11 qui lui correspond (et plus particulièrement on fixe chaque embase femelle 16 sur l'embase mâle 15 qui lui correspond en réalisant une jonction mécanique telle que décrite plus haut), de sorte à réaliser et maintenir au sein de chaque connecteur 10 de la pluralité de connecteurs une jonction électrique 21, ici sans soudure, tel que cela a été expliqué plus haut, puis, lors de l'étape (c) d'enrobage, on noie l'ensemble de la pluralité connecteurs 10 dans un même bloc du matériau d'enrobage 22 polymère.

Avantageusement, une seule opération d'enrobage suffit ainsi à conférer de manière simple et rapide une étanchéité, au moins à l'eau liquide, à l'ensemble des connecteurs 10 qui n'étaient initialement pas étanches.

De façon particulièrement préférentielle, les portions mâles 11 des différents connecteurs peuvent alors comporter chacune une embase mâle 15 en matériau électriquement isolant, tel que décrit plus haut, et lesdites embases mâles 15 des différents connecteurs 10 peuvent alors être formées d'un seul tenant les unes avec les autres.

En pratique, l'ensemble des embases mâles 15 des connecteurs 10 pourront ainsi être réunies en une même pièce monolithique 25 en polymère rigide, de préférence thermoplastique, ladite pièce monolithique 25 formant de préférence le fond du boîtier de connexion 20 dans lequel on coule matériau d'enrobage 22, tel que cela est illustré sur la figure 1.

On simplifiera ainsi la fabrication et la mise en place des embases mâles 15 au sein de l'appareil électrique 3, 4, 5.

Selon une variante possible de mise en oeuvre, et tel que cela est illustré sur la figure 7, le procédé peut comprendre une étape d'habillage, qui précède l'étape (c) d'enrobage, et au cours de laquelle on met en place une gaine thermo-rétractable 26 qui couvre une partie de la portion femelle 13 du connecteur 10 et l'extrémité correspondante du câble électrique 1, de sorte à empêcher l'intrusion de matériau d'enrobage 22 polymère entre le câble électrique 1 et la portion femelle 13 du connecteur lors de l'étape (c) d'enrobage.

Selon une telle variante, il n'est avantageusement pas nécessaire de conférer à la portion femelle 13, et plus particulièrement à l'embase femelle 16, une forme complexe destinée à empêcher l'infiltration de matériau d'enrobage 22 dans le connecteur 10, le long des fils 2.

Par ailleurs, quelle que soit la variante considérée du procédé, le câble électrique 1 peut de préférence comprendre une gaine 27 d'où émergent les fils conducteurs 2 reliés électriquement à l'au moins une borne femelle 14.
lors de l'étape (c) d'enrobage, le matériau d'enrobage 22 polymère qui recouvre le connecteur 10 recouvrira alors de préférence également ladite gaine 27 sur une longueur L22 au moins égale à 3 mm, et par exemple comprise entre 3 mm et 10 mm.

Un tel recouvrement améliorera à la fois l'ancrage mécanique du câble 1 sur le connecteur 10, et l'étanchéité (à l'eau) de l'ensemble.

L'invention concerne bien entendu en tant que tel un système embarqué sur un véhicule, et notamment un système de direction assistée, qui comprend un appareil électrique 3, et notamment un calculateur 5, un moteur électrique 4, un capteur, ou un groupe moto-calculateur 4, 5, câblé selon un procédé conforme à l'invention, ainsi qu'un véhicule, et notamment un véhicule automobile, équipé d'un tel système embarqué.

L'invention concerne en outre en tant que telle l'utilisation de connecteurs 10 non étanches à l'eau (c'est-à-dire en particulier intrinsèquement dépourvus de joint en élastomère qui permettraient d'assurer une étanchéité à l'eau entre les portions mâles et femelles), noyés dans un matériau polymère d'enrobage 22, de type résine, pour réaliser une connexion électrique entre un câble électrique 1 et un appareil électrique 3.

Ainsi, en particulier, on pourrait également envisager un procédé au cours duquel on préparerait un connecteur 10, de préférence un connecteur non étanche à l'eau liquide, dont la portion mâle 11 comprend une embase 15 rigide qui maintient plusieurs bornes mâles 12 distinctes en position fixe selon un agencement spatial prédéterminé (par rapport à ladite embase), et dont la portion femelle 13 comprendrait de même une embase 16 rigide, de préférence de forme sensiblement conjuguée à la forme de l'embase 15 de la portion mâle, et qui maintient plusieurs bornes femelles 14 distinctes, en position fixe et selon un agencement correspondant à celui des bornes mâles 12, au cours duquel on relierait les bornes mâles 12 à différents conducteurs de l'appareil électrique 3, respectivement les bornes femelles 14 à différents fils conducteurs 2 d'un ou plusieurs câbles 1, puis au cours duquel on réaliserait la jonction mécanique desdites portions mâles 11 et femelle 13 et ce faisant la jonction électrique 21 des bornes mâles 12 et femelles 14, de préférence sans soudure, puis on réaliserait un enrobage dudit connecteur 10 par un matériau d'enrobage 22 polymère formant une enveloppe étanche à l'eau liquide, comme indiqué plus haut.

## Revendications

1. Procédé de câblage permettant de raccorder un câble électrique (1), comprenant un ou plusieurs fils conducteurs (2), à un appareil électrique (3, 4, 5), tel qu'un groupe moto-calculateur (4, 5) de direction assistée, ledit procédé comprenant :
une étape (a) de préparation au cours de laquelle
on prépare au moins un connecteur (10) qui comprend d'une part une première portion, dite portion mâle (11), qui porte au moins une première borne électriquement conductrice, dite borne mâle (12), et d'autre part une seconde portion, dite portion femelle (13), qui est distincte de la portion mâle (11) et qui porte au moins une seconde borne électriquement conductrice, dite borne femelle (14), ledit connecteur (10) comprenant également au moins un organe de retenue (17, 18) qui permet de maintenir la portion mâle (11) contre la portion femelle (13) de telle sorte que l'au moins une borne mâle (12) soit au contact de l'au moins une borne femelle (14),
on équipe l'appareil électrique (3, 4, 5) d'un boîtier de connexion (20), au sein duquel on place la portion mâle (11) du connecteur, et l'on raccorde électriquement la borne mâle (12) à l'appareil électrique (3, 4, 5),
on équipe le câble électrique (1) avec la portion femelle (13) du connecteur, et l'on raccorde électriquement la borne femelle (14) à au moins un fil conducteur (2),
puis une étape (b) de connexion, au cours de laquelle on engage et l'on fixe la portion femelle (13) du connecteur sur la portion mâle (11) dudit connecteur au moyen de l'au moins un organe de retenue (17, 18), de sorte à créer et maintenir une jonction électrique (21) sans soudure entre la borne mâle (12) et la borne femelle (14),
puis une étape (c) d'enrobage, au cours de laquelle on remplit le boîtier de connexion (20) d'un matériau d'enrobage (22) polymère qui recouvre les portions mâle (11) et femelle (13) du connecteur (10) de sorte à former une enveloppe étanche qui protège au moins de l'eau liquide la jonction électrique (21) sans soudure.

2. Procédé selon la revendication 1 **caractérisé en ce que** le sous-ensemble formé par les portions mâle (11) et femelle (13) du connecteur (10) assemblées et maintenues par l'organe de retenue (17, 18) lors de l'étape (b) de connexion n'est, avant l'étape (c) d'enrobage, pas étanche à l'eau liquide.

3. Procédé selon la revendication 1 ou 2, **caractérisé en ce que** le connecteur est dépourvu de joint en élastomère apte à créer et assurer une étanchéité à l'eau liquide entre la portion mâle (11) et la portion femelle (13) du connecteur (10) lors de l'étape (b) de connexion.

4. Procédé selon l'une des revendications précédentes **caractérisé en ce que** la portion mâle (11) du connecteur comprend une première embase (15), dite embase mâle, qui est électriquement isolante et qui sert de support à l'au moins une borne mâle (12), tandis que la portion femelle (13) dudit connecteur comprend une seconde embase (16), dite embase femelle, qui est électriquement isolante et qui sert de support à l'au moins une borne femelle (14).

5. Procédé selon la revendication 4 **caractérisé en ce que** l'embase mâle (15) du connecteur sert également de support à au moins un premier organe de retenue (17) qui est distinct de ladite au moins une borne mâle (12), et qui est de préférence formé d'un seul tenant avec ladite embase mâle (15), tandis que l'embase femelle (16) sert de support à un second organe de retenue (18) qui est distinct de la borne femelle (14), et qui est de préférence formé d'un seul tenant avec ladite embase femelle (16), et qui est agencé pour venir en prise avec l'organe de retenue mâle (17), lors de l'étape (b) de connexion, afin de créer et maintenir une jonction mécanique entre les portions mâle (11) et femelle (13) du connecteur, qui s'oppose à la séparation desdites portions mâle et femelle et maintient la jonction électrique (21) entre les bornes mâle et femelle.

6. Procédé selon la revendication 5 **caractérisé en ce que** les organes de retenue mâle (17) et femelle (18) coopèrent par encliquetage.

7. Procédé selon l'une des revendications 4 à 6 **caractérisé en ce que** les embases (15, 16) respectives de la portion mâle (11) et de la portion femelle (13) du connecteur sont agencées de manière à ce que, une fois l'étape (b) de connexion réalisée, lesdites embases (15, 16) enveloppent la jonction électrique (21) de façon étanche au matériau d'enrobage (22) polymère lorsque celui-ci se trouve à l'état liquide, de sorte à empêcher une intrusion dudit matériau d'enrobage (22) polymère au niveau de la jonction électrique (21) lors de l'étape (c) d'enrobage.

8. Procédé selon la revendication 7 **caractérisé en ce que** l'embase femelle (16) du connecteur présente une forme tubulaire délimitée par une paroi latérale (23), et dans laquelle l'embase de la portion mâle vient s'engager lors de l'étape (b) de connexion, et **en ce que** la paroi latérale (23) de l'embase femelle (16) et/ou l'embase mâle (15) comporte des protubérances (24), du type déflecteurs ou lèvres, qui créent avec l'autre embase (16, 15) au moins une chicane et/ou au moins un rétrécissement, étanche au matériau d'enrobage (22) polymère à l'état liquide.

9. Procédé selon l'une des revendications précédentes **caractérisé en ce qu'**il permet de raccorder à l'appareil électrique (3, 4, 5) plusieurs câbles électriques (1) distincts, comprenant chacun un ou plusieurs fils conducteurs (2), **en ce que**, lors de l'étape (a) de préparation, on prévoit plusieurs connecteurs (10) dont on place les portions mâles (11) respectives dans le boîtier de connexion (20) et l'on équipe chaque câble électrique (1) d'une portion femelle (13) de connecteur correspondante, **en ce que**, lors de l'étape (b) de connexion, on raccorde chaque portion femelle (13) à la portion mâle (11) qui lui correspond, de sorte à réaliser et maintenir au sein de chaque connecteur (10) de la pluralité de connecteurs une jonction électrique (21) sans soudure, et **en ce que**, lors de l'étape (c) d'enrobage, on noie l'ensemble de la pluralité connecteurs (10) dans un même bloc du matériau d'enrobage (22) polymère.

10. Procédé selon la revendication 9 et l'une des revendications 4 à 8, **caractérisé en ce que** les portions mâles (11) des différents connecteurs (10) comportent chacune une embase mâle (15) en matériau électriquement isolant, et **en ce que** lesdites embases mâles (15) des différents connecteurs (10) sont formées d'un seul tenant les unes avec les autres.

11. Procédé selon l'une des revendications précédentes **caractérisé en ce qu'**il comprend une étape d'habillage, au cours de laquelle on met en place une gaine thermo-rétractable (26) qui couvre une partie de la portion femelle (13) du connecteur (10) et l'extrémité correspondante du câble électrique (1), de sorte à empêcher l'intrusion de matériau d'enrobage (22) polymère entre le câble électrique (1) et la portion femelle (13) du connecteur lors de l'étape (c) d'enrobage.

12. Procédé selon l'une des revendications précédentes **caractérisé en ce que** le câble électrique (1) comprend une gaine (27) d'où émergent les fils conducteurs (2) reliés électriquement à l'au moins une borne femelle (14), et **en ce que**, lors de l'étape (c) d'enrobage, le matériau d'enrobage (22) polymère qui recouvre le connecteur (10) recouvre également ladite gaine (27) sur une longueur (L22) au moins égale à 3 mm.

13. Système de direction assistée comprenant un appareil électrique (3, 4, 5) câblé par un procédé selon l'une quelconque des revendications 1 à 12.

## Patentansprüche

1. Verdrahtungsverfahren, das das Verbinden eines elektrischen Kabels (1), das einen oder mehrere Leitungsdrähte (2) umfasst, an ein elektrisches Gerät (3, 4, 5) ermöglicht, wie eine Antriebsrechnereinheit (4, 5) für eine Servolenkung, wobei das Verfahren umfasst:
einen Bereitstellungsschritt (a), während dem
mindestens ein Verbinder (10) bereitgestellt wird, der einerseits einen ersten Bereich, männlicher Bereich (11) genannt, umfasst, der mindestens eine erste elektrisch leitende Klemme, männliche Klemme (12) genannt, trägt, und andererseits einen zweiten Bereich, weiblicher Bereich (13) genannt, der vom männlichen Bereich (11) getrennt ist, und mindestens eine zweite elektrisch leitenden Klemme, weibliche Klemme (14) genannt, trägt, wobei der Verbinder (10) auch mindestens ein Rückhalteelement (17, 18) umfasst, das das Fixieren des männlichen Bereichs (11) gegen den weiblichen Bereich (13) ermöglicht, so dass die mindestens eine männliche Klemme (12) mit der mindestens einen weiblichen Klemme (14) in Kontakt steht,
das elektrische Gerät (3, 4, 5) mit einem Verbindungsgehäuse (20) ausgestattet wird, in dem der männliche Bereich (11) des Verbinders eingesetzt wird, und die männliche Klemme (12) elektrisch mit dem elektrischen Gerät (3, 4, 5) verbunden wird,
das elektrische Kabel (1) mit dem weiblichen Bereich (13) des Verbinders ausgestattet wird, und die weibliche Klemme (14) mit mindestens einem Leitungsdraht (2) elektrisch verbunden wird,
anschließend einen Verbindungsschritt (b), während dem der weibliche Bereich (13) des Verbinders mittels dem mindestens einen Rückhalteelement (17, 18) in den männlichen Bereich (11) des Verbinders eingerastet und gefestigt wird, so dass eine lötfreie elektrische Verbindungsstelle (21) zwischen der männlichen Klemme (12) und der weiblichen Klemme (14) hergestellt und fixiert wird,
anschließend einen Umhüllungsschritt (c), während dem das Verbindungsgehäuse (20) mit einem Polymer-Umhüllungsmaterial (22) gefüllt wird, das den männlichen (11) und den weiblichen (13) Bereich des Verbinders (10) so bedeckt, dass ein dichter Mantel gebildet wird, der die lötfreie elektrische Verbindungsstelle (21) mindestens vor flüssigem Wasser schützt.

2. Verfahren nach Anspruch 1, **dadurch gekennzeichnet, dass** die aus den männlichen (11) und weiblichen (13) Bereichen des Verbinders (10) gebildete Unterbaugruppe, die während des Verbindungsschritts (b) vom Rückhalteelement (17, 18) zusammengebaut und fixiert wird, vor dem Umhüllungsschritt (c), nicht gegen flüssiges Wasser dicht ist.

3. Verfahren nach Anspruch 1 oder 2, **dadurch gekennzeichnet, dass** der Verbinder keine Elastomerdichtung aufweist, die in der Lage ist, während dem Verbindungsschritt (b) eine Abdichtung gegen flüssiges Wasser zwischen dem männlichen Bereich (11) und dem weiblichen Bereich (13) des Verbinders (10) herzustellen und abzusichern.

4. Verfahren nach einem der vorhergehenden Ansprüche, **dadurch gekennzeichnet, dass** der männliche Bereich (11) des Verbinders einen ersten Sockel (15), männlicher Sockel genannt, umfasst, der elektrisch isolierend ist und als Träger für die mindestens eine männliche Klemme (12) dient, wohingegen der weibliche Bereich (13) des Verbinders einen zweiten Sockel (16), weiblicher Sockel genannt, umfasst, der elektrisch isolierend ist und als Träger für die mindestens eine weibliche Klemme (14) dient.

5. Verfahren nach Anspruch 4, **dadurch gekennzeichnet, dass** der männliche Sockel (15) des Verbinders auch als Träger für mindestens ein erstes Rückhalteelement (17) dient, das von der mindestens einen männlichen Klemme (12) getrennt ist, und vorzugsweise einteilig mit dem männlichen Sockel (15) gebildet wird, wohingegen der weibliche Sockel (16) als Träger für ein zweites Rückhalteelement (18) dient, das von der weiblichen Klemme (14) getrennt ist, und vorzugsweise einteilig mit dem weiblichen Sockel (16) gebildet wird, und so eingerichtet ist, dass er, im Verbindungsschritt (b), mit dem männlichen Rückhalteelement (17) in Eingriff kommt, um eine mechanische Verbindungsstelle zwischen dem männlichen (11) und dem weiblichen (13) Bereich des Verbinders herzustellen und zu fixieren, die der Trennung des männlichen und weiblichen Bereichs entgegenwirkt und die elektrische Verbindungsstelle (21) zwischen der männlichen und der weiblichen Klemme fixiert.

6. Verfahren nach Anspruch 5, **dadurch gekennzeichnet, dass** die männlichen (17) und weiblichen (18) Rückhalteelemente durch Einschnappen zusammenarbeiten.

7. Verfahren nach einem der Ansprüche 4 bis 6, **dadurch gekennzeichnet, dass** die jeweiligen Sockel (15, 16) des männlichen Bereichs (11) und des weiblichen Bereichs (13) des Verbinders so eingerichtet sind, dass die Sockel (15, 16) nach Abschluss des Verbindungsschritts (b) die elektrische Verbindungsstelle (21) mit dem Polymer-Umhüllungsmaterial (22) dicht ummanteln, wenn sich dieses im flüssigen Zustand befindet, so dass ein Eindringen des Polymer-Umhüllungsmaterials (22) im Bereich der elektrischen Verbindungsstelle (21) während dem Umhüllungsschritt (c) verhindert wird.

8. Verfahren nach Anspruch 7, **dadurch gekennzeichnet, dass** der weibliche Sockel (16) des Verbinders eine röhrenförmige Form aufweist, die von einer Seitenwand (23) begrenzt wird, und in die der Sockel des männlichen Bereichs während des Verbindungsschritts (b) eingreift, und dass die Seitenwand (23) des weiblichen Sockels (16) und/oder des männlichen Sockels (15) Vorsprünge (24) vom Typ Abweiser oder Lippen beinhaltet, die mit dem anderen Sockel (16, 15) mindestens eine Blende und/oder mindestens eine Verengung herstellen, die dicht ist gegen das Polymer-Umhüllungsmaterial (22) im flüssigen Zustand.

9. Verfahren nach einem der vorhergehenden Ansprüche, **dadurch gekennzeichnet, dass** es ermöglicht, mehrere getrennte elektrische Kabel (1) mit dem elektrischen Gerät (3, 4, 5) zu verbinden, die jeweils einen oder mehrere Leitungsdrähte (2) umfassen, dass, während des Bereitstellungsschritts (a), mehrere Verbinder (10) vorgesehen sind, von denen die jeweiligen männlichen Bereiche (11) ins Verbindungsgehäuse (20) eingesetzt werden, und jedes elektrische Kabel (1) mit einem entsprechenden weiblichen Bereich (13) des Verbinders ausgestattet wird, und dass, während dem Verbindungsschritt (b), jeder weibliche Bereich (13) mit dem ihm entsprechenden männlichen Bereich (11) verbunden wird, so dass innerhalb jedes Verbinders (10) der Vielzahl von Verbindern eine lötfreie elektrische Verbindungsstelle (21) erstellt und fixiert wird, und dass, während dem Umhüllungsschritt (c), die Baugruppe der Vielzahl von Verbindern (10) in einen einzigen Block des Polymer-Umhüllungsmaterials (22) getaucht wird.

10. Verfahren nach Anspruch 9 und einem der Ansprüche 4 bis 8, **dadurch gekennzeichnet, dass** die männlichen Bereiche (11) der verschiedenen Verbinder (10) jeweils einen männlichen Sockel (15) aus elektrisch isolierendem Material beinhalten, und dass die männlichen Sockel (15) der verschiedenen Verbinder (10) miteinander einteilig gebildet sind.

11. Verfahren nach einem der vorhergehenden Ansprüche, **dadurch gekennzeichnet, dass** es einen Überzugsschritt umfasst, während dem ein Schrumpfschlauch (26) angebracht wird, der einen Teil des weiblichen Bereichs (13) des Verbinders (10) und das entsprechende Ende des elektrischen Kabels (1) so abdeckt, dass das Eindringen von Polymer-Umhüllungsmaterial (22) zwischen dem elektrischen Kabel (1) und dem weiblichen Bereich (13) des Verbinders während dem Umhüllungsschritt (c) verhindert wird.

12. Verfahren nach einem der vorhergehenden Ansprüche, **dadurch gekennzeichnet, dass** das elektrische Kabel (1) eine Hülle (27) umfasst, aus der die elektrisch mit der mindestens einen weiblichen Klemme (14) verbundenen Leitungsdrähte (2) austreten, und dass, während dem Umhüllungsschritts (c), das den Verbinder (10) abdeckende Polymer-Umhüllungsmaterial (22) auch die Hülle (27) über eine Länge (L22) von mindestens 3 mm abdeckt.

13. Servolenkungssystem, ein elektrisches Gerät (3, 4, 5) umfassend, das durch ein Verfahren nach einem der Ansprüche 1 bis 12 verdrahtet ist.

## Claims

1. A wiring method allowing connecting an electrical cable (1), comprising one or several conductive wire(s) (2), to an electrical appliance (3, 4, 5), such as a power steering drive-calculator unit (4, 5), said method comprising:
a preparation step (a) during which
at least one connector (10) is prepared which comprises on the one hand a first portion, called male portion (11), which carries at least one electrically-conductive first terminal, called male terminal (12), and on the other hand a second portion, called female portion (13), which is distinct from the male portion (11) and which carries at least one second electrically-conductive terminal, called female terminal (14), said connector (10) also comprising at least one retaining member (17, 18) which allows maintaining the male portion (11) against the female portion (13) so that the at least one male terminal (12) is in contact with the at least one female terminal (14),
the electrical appliance (3, 4, 5) is equipped with a connection box (20), within which the male portion (11) of the connector is placed, and the male terminal (12) is electrically connected to the electrical appliance (3, 4, 5),
the electrical cable (1) is equipped with the female portion (13) of the connector, and the female terminal (14) is electrically connected to at least one conductive wire (2),
then a connection step (b), during which the female portion (13) of the connector is engaged and fixed on the male portion (11) of said connector by means of the at least one retaining member (17, 18), so as to create and maintain a weldless electrical junction (21) between the male terminal (12) and the female terminal (14),
then an encapsulation step (c), during which the connection box (20) is filled with a polymeric encapsulation material (22) which covers the male (11) and female (13) portions of the connector (10) so as to form a sealed envelope which protects at least the weldless electrical junction (21) from liquid water.

2. The wiring method according to claim 1, **characterized in that** the sub-assembly formed by the male (11) and female (13) portions of the connector (10) assembled and maintained by the retaining member (17, 18) during the connection step (b) is not sealed to liquid water, before the encapsulation step (c).

3. The wiring method according to claim 1 or 2, **characterized in that** the connector is devoid of any elastomer gasket adapted to create and ensure sealing to liquid water between the male portion (11) and the female portion (13) of the connector (10) during the connection step (b).

4. The wiring method according to any of the preceding claims, **characterized in that** the male portion (11) of the connector comprises a first base (15), called male base, which is electrically-insulating and which serves as a support for the at least one male terminal (12), whereas the female portion (13) of said connector comprises a second base (16), called female base, which is electrically-insulating and which serves as a support for the at least one female terminal (14).

5. The wiring method according to claim 4, **characterized in that** the male base (15) of the connector also serves as a support for at least one first retaining member (17) which is distinct from said at least one male terminal (12), and which is preferably integrally formed with said male base (15), whereas the female base (16) serves as a support for a second retaining member (18) which is distinct from the female terminal (14), and which is preferably integrally formed with said female base (16), and which is arranged to be engaged with the male retaining member (17), during the connection step (b), in order to create and maintain a mechanical junction between the male (11) and female (13) portions of the connector, which resists the separation of said male and female portions and maintains the electrical junction (21) between the male and female terminals.

6. The wiring method according to claim 5, **characterized in that** the male (17) and female (18) retaining members cooperate by snap-fitting.

7. The wiring method according to any of claims 4 to 6, **characterized in that** the respective bases (15, 16) of the male portion (11) and of the female portion (13) of the connector are arranged so that, once the connection step (b) is completed, said bases (15, 16) wrap the electrical junction (21) in a sealed manner to the polymeric encapsulation material (22) when it is in the liquid state, so as to prevent an intrusion of said polymeric encapsulation material (22) at the level of the electrical junction (21) during the encapsulation step (c).

8. The wiring method according to claim 7, **characterized in that** the female base (16) of the connector has a tubular shape delimited by a side wall (23), and wherein the base of the male portion is engaged during the connection step (b), and **in that** the side wall (23) of the female base (16) and/or the male base (15) includes protrusions (24), of the deflector or lip type, which create with the other base (16, 15) at least one baffle and/or at least one constriction, sealed to the polymeric encapsulation material (22) in the liquid state.

9. The wiring method according to any of the preceding claims, **characterized in that** it allows connecting several distinct electrical cables (1), each comprising one or several conductive wire(s) (2) to the electrical appliance (3, 4, 5), **in that**, during the preparation step (a), several connectors (10) are provided, whose respective male portions (11) are placed in the connection box (20), and each electrical cable (1) is equipped with a corresponding connector female portion (13), **in that**, during the connection step (b), each female portion (13) is connected to the male portion (11) corresponding thereto, so as to achieve and maintain within each connector (10) of the plurality of connectors a weldless electrical junction (21), and **in that**, during the encapsulation step (c), all of the plurality of connectors (10) are embedded in one single block of the polymeric encapsulation material (22).

10. The wiring method according to claim 9 and any of claims 4 to 8, **characterized in that** each of the male portions (11) of the different connectors (10) includes a male base (15) made of an electrically-insulating material, and **in that** said male bases (15) of the different connectors (10) are integrally formed with each other.

11. The wiring method according to any of the preceding claims, **characterized in that** it comprises a dressing step, during which a heat-shrinkable sheath (26) is put in place which covers part of the female portion (13) of the connector (10) and the corresponding end of the electrical cable (1), so as to prevent the intrusion of polymeric encapsulation material (22) between the electrical cable (1) and the female portion (13) of the connector during the encapsulation step (c).

12. The wiring method according to any of the preceding claims, **characterized in that** the electrical cable (1) comprises a sheath (27) from where the conductive wires (2) electrically connected to the at least one female terminal (14) emerge, and **in that**, during the encapsulation step (c), the polymeric encapsulation material (22) which covers the connector (10) also covers said sheath (27) over a length (L22) at least equal to 3 mm.

13. A power steering system comprising an electrical appliance (3, 4, 5) wired by a wiring method according to any one of claims 1 to 12.
